# EUROPEAN PATENT SPECIFICATION

(11) **EP 4 336 999 B1**
(45) Date of publication and mention of the grant of the patent: **14.05.2025**
(21) Application number: 22721829.4
(22) Date of filing: 27.04.2022
(51) Int. Cl.: A01K 7/06, A01K 7/00, A01K 9/00

(54) **AN APPARATUS FOR PROVIDING DRINKING WATER TO PIGS**
VORRICHTUNG ZUR BEREITSTELLUNG VON TRINKWASSER FÜR SCHWEINE
APPAREIL POUR FOURNIR DE L'EAU POTABLE À DES PORCS

(30) Priority: 14.05.2021 GB 202106892
(43) Date of publication of application: 20.03.2024
(73) Proprietor: John Harvey Engineering Limited, Suffolk IP13 9AF (GB)
(72) Inventor: HARVEY, John, Suffolk IP13 9AF (GB)
(74) Representative: Willett, Christopher David
(86) International application number: PCT/GB2022/051060
(87) International publication number: WO 2022/238676

(56) References cited:
- CN-U- 207 340 946
- DE-A1- 3 025 365
- GB-A- 2 092 876
- US-A- 4 246 870
- US-A- 4 892 061
- US-A1- 2018 249 676

## Description

### Technical Field

The present invention relates to an apparatus for providing drinking water to pigs.

### Background and Prior Art

In the pig farming industry devices are known that provide feed and drinking water to pigs.

This enables the control of the amount and quality of the feed and water, which results in improved health and development of the farmed pigs.

There are devices that provide feed, known as pig feeders, devices that provide drinking water, known as pig drinkers, and devices that provide both feed and water, known as pig feeder/drinkers.

A known design of pig drinker provides a trough comprising a horizontal water supply tube that receives drinking water into one end and delivers drinking water through one or more nipples spaced along the length of the tube. Such a pig drinker may be provided with a trough to catch any water that a pig does not directly drink from a nipple, providing a supply of fresh drinking water in the trough. The trough is typically mounted close to the ground in order to replicate the natural drinking instinct of drinking from a puddle or pond. However, they are often positioned spaced somewhat above the ground, particularly where the surrounding floor contains straw or other debris, in order to prevent contamination of the water.

US 2018/249676 A1, GB 2092876 A, US 4892061 A, CN 207340946 U, US 4246870 A and DE 30 25365 A1 disclose known drinking devices for animals.

However, it has been found that pigs may sometimes get their trotters trapped behind the horizontal water supply tube.

Improvements in this area would be desirable.

### Brief Description of the Invention

In a first aspect, the invention relates to an apparatus for providing drinking water to pigs, the apparatus comprising: an elongate trough comprising a base, a rear wall, a forward lip, and a top lip extending forwardly from the rear wall; a horizontal water supply tube having a first end and a second end, the first end providing an inlet adapted to receive a supply of drinking water, and a plurality of nipples spaced apart along the length of the water supply tube and protruding therefrom, the water supply tube being mounted within the trough by being located below and adjacent to the top lip; whereby in use drinking water enters the water supply tube and leaves via the plurality of nipples and is catchable by falling onto the base of the elongate trough.

Thus, clean drinking water can be provided to pigs in an efficient manner, and the material needed to manufacture the trough is minimised by locating the top lip adjacent to the water supply tube. Additionally, as the water supply tube is adjacent to the top lip, there is no possibility that a pig can get their trotters trapped behind it.

Preferably at least one additional nipple is provided at the first and/or second end, wherein the at least one additional nipple extends beyond the trough, such that water leaving the at least one nipple is not catchable by falling onto the trough. Thus, the trough may provide drinking water for a plurality of pigs according to the number of nipples, but also, by including additional nipple(s) a capability to provide drinking water to a greater number of pigs may be achieved before an additional trough is required to be installed.

Such nipples may be activatable by nudging by the snout of a pig and such additional nipples, may be activatable by biting action from a pig.

The apparatus is a pig drinker and does not dispense feed.

By "adjacent the top lip" means in close contact therewith, e.g. less than 25mm, preferably less than 10mm, more preferably less than 5mm.

The horizontal water supply tube is preferably connected to the top lip, preferably removable, e.g. by a nut-and-bolt attachment, so that the horizontal supply tube can be removed for maintenance whilst the trough remains attached to a wall of a building.

The trough is typically made of metal, such as stainless steel or aluminium. Alternatively it may be made from plastics.

In a typical arrangement the base is horizontal along its length and the rear wall is vertical. However, deviations from horizontal and vertical are possible. The base may be flat, curved or v-shaped in cross-section, as desired.

The trough may have any appropriate length, but typically will be in the range of from 30 to 300cm.

The nipples are designed so that they only permit the flow of drinking water out of them when they are nudged by the snout of a pig. Typically there will be from 3 to 15 such nipples generally evenly spaced along the trough.

Preferably the top lip is at an angle to the horizontal, and covers a portion of the base, leaving a portion of the base uncovered. The top lip may alternatively be horizontal.

Preferably the trough comprises first and second end plates, so that any water falling onto the base is contained within the trough. This is achieved by the end plates creating a basin within the trough. The contained water remains fresh for some time and therefore ensures no water is wasted. Alternatively the base may be angled upwards at the two ends of the trough, so that any water falling onto the base is contained within the trough.

Optionally the apparatus comprises a height adjustment means, to permit the trough to be raised and/or lowered. For example this can be by attachment to a support bracket attached to the wall with a suitable fastening means attached to the rear of the trough.

In a second aspect, the invention relates to a building suitable for housing pigs comprising at least one apparatus as described herein. Preferably the apparatus is positioned such that the base is from 50 to 200mm from the ground.

The invention will now be illustrated, by way of example, and with reference to the following figures, in which:
Figure 1 is a side sectional view through a known pig drinker.
Figure 2 is a side sectional view through a pig drinker apparatus according to the first aspect of the present invention.
Figure 3 is a perspective view of the apparatus shown in figure 1.
Figure 4 is a perspective view of an apparatus according to the second aspect of the present invention.
Figure 5 is a rear perspective view of one side of the apparatus shown in figure 1 showing a wall mounting means.

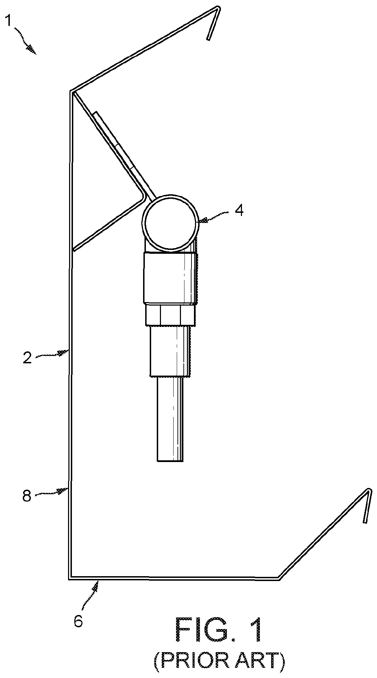

Turning to the figures, figure 1 shows a side sectional view through a known form of apparatus **1** for providing drinking water to pigs comprising an elongate trough **2** and a horizontal water supply tube **4.** The trough **2** comprises a horizontal base **6,** a vertical rear wall **8.** The gap between the water supply tube **4** and the rear wall **8** is 33mm, which is large enough to permit a pig to place their trotters behind the tube and sometimes get them trapped there.

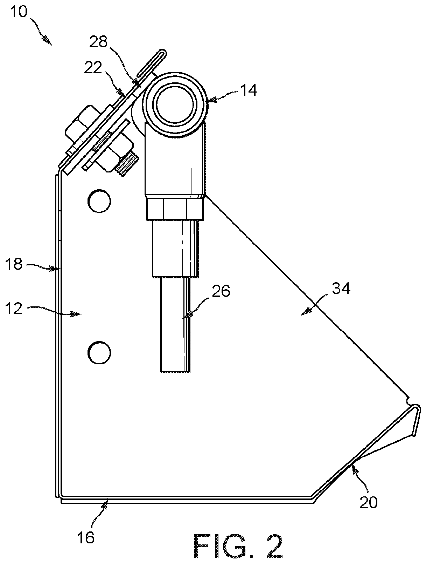

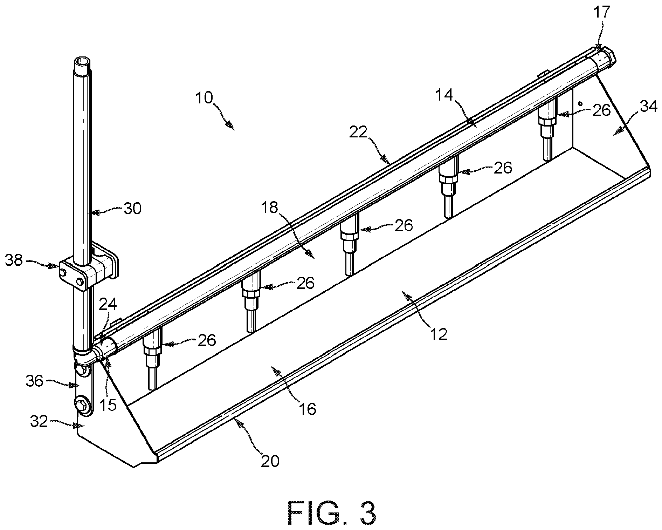

Figures 2 and 3 show an apparatus **10,** according to the first aspect of the invention, for providing drinking water to pigs comprising an elongate trough **12** and a horizontal water supply tube **14.**

The trough **12** comprises a base **16** that is horizontal along its length and flat in cross-section, a vertical rear wall **18,** a forward lip **20,** and a top lip **22** extending forwardly and angled upwards from the vertical rear wall **18.** The ends of the trough **12** are provided by first end plate **32** and second end plate **34.**

The trough **12** is attachable to a vertical supporting wall of a building (not shown) by placing the vertical rear wall **18** against the wall. The trough **12** may be attached to the wall in a variety of ways, and may be attached to an adjustable height bracket (not shown) if changes in the height of the base **16** from the floor are desired. The end plates include holes **13** to enable the attachment of a bracket **36** discussed below. The base **16** is raised 100mm above the floor of a building (not shown) for housing pigs.

The horizontal water supply tube **14** comprises a first end **15** and a second end **17,** the first end **15** providing an inlet **24** adapted to receive a supply of drinking water, and a plurality of nipples **26** spaced apart along the length of the water supply tube **14** and protruding therefrom. Feeding into the inlet **24** is a water inlet tube **30** that may be hard plumbed with steel pipe or flexible pipe is height adjustment is desired (see below).

The water supply tube **14** is mounted within the trough **12** by being located adjacent to the top lip **22,** and separated therefrom only by a mounting plate **28** which is 3mm thick. In this way, there is no possibility that a pig can get their trotters trapped behind it. The water supply tube **14** is bolted to the trough **12** through the top lip **22,** allowing the easy removal of the water supply tube **14** e.g. for maintenance while leaving the trough **12** in place.

Attached to the first end plate **32** is a bracket **36** attached thereto by being bolted through holes **13.** The bracket **36** comprises a pipe clamp **38** for holding the water inlet tube **30** in place. If it is desired to raise or lower the trough **12** then the entire trough **12** can be raised or lowered, provided there is a flexible connection to water inlet tube **30.**

In use, drinking water is provided to water inlet tube **30** into inlet **24** and to water supply tube **14.** When a pig desires drinking water, it nudges the nipples **26** causing water to be dispensed for drinking. Any water that is not drank immediately falls onto horizontal base **16** and remains there, being contained by end plates **32, 34.** The top lip **22** acts to prevent undesirable material from falling into the trough **12,** e.g. any material attached to a supporting wall of a building.

Additionally, as the water supply tube **14** is located adjacent to the top lip **22,** the design is efficient in terms of material used in construction.

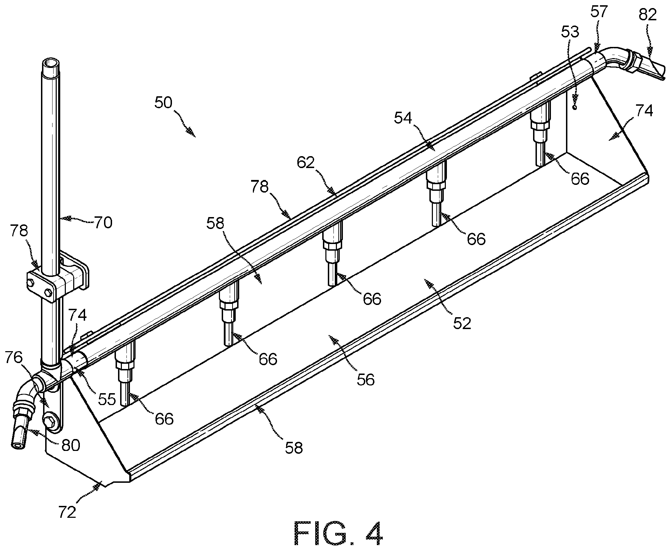

Figure 4 shows a second apparatus **50,** according to the invention, for providing drinking water to pigs comprising an elongate trough **52** and a horizontal water supply tube **54.**

The trough **52** comprises a horizontal base **56,** a vertical rear wall **58,** a forward lip **60,** and a top lip **62** extending forwardly and angled upwards from the vertical rear wall **58.** The ends of the trough **52** are provided by first end plate **72** and second end plate **74.** The trough **52** is attachable to a vertical supporting wall of a building (not shown) by placing the vertical rear wall **58** against the wall.

The trough **52** is attachable to a vertical supporting wall of a building (not shown) by placing the vertical rear wall **58** against the wall. The trough **52** may be attached to the wall in a variety of ways, and may be attached to an adjustable height bracket (not shown) if changes in the height of the base **56** from the floor are desired. The end plates include holes **53** to enable the attachment of a bracket **76** discussed below. The base **56** is raised 100mm above the floor of a building (not shown) for housing pigs.

The horizontal water supply tube **54** comprises a first end **55** and a second end **57,** the first end **55** providing an inlet **74** adapted to receive a supply of drinking water, and a plurality of nipples **66** spaced apart along the length of the water supply tube **54** and protruding therefrom. Feeding into the inlet **74** is a water inlet tube **70** that may be hard plumbed with steel pipe or flexible pipe is height adjustment is desired (see below).

The water supply tube **54** is mounted within the trough **52** by being located adjacent to the top lip **62,** and separated therefrom only by a mounting plate **78** which is 3mm thick. In this way, there is no possibility that a pig can get their trotters trapped behind it. The water supply tube **54** is bolted to the trough **52** through the top lip **62,** allowing the easy removal of the water supply tube **54** e.g. for maintenance while leaving the trough **52** in place.

Attached to the first end plate **72** is a bracket **76** attached thereto by being bolted through holes **53.** The bracket **76** comprises a pipe clamp **78** for holding the water inlet tube **70** in place. If it is desired to raise or lower the trough **52** then the entire trough **52** can be raised or lowered, provided there is a flexible connection to water inlet tube **70.**

Also provided is a first additional nipple **80,** activatable by biting, at the first end **55** and a second additional nipple **82,** also activatable by biting, at the second end **57.** The additional nipples **80, 82** extend beyond the trough **52,** such that water leaving the additional nipples **80, 82** is not catchable by falling onto the trough **52.** The additional nipples **80, 82** can be removed or added as desired, in order to expand the drinking capacity of the trough **52.**

In use, drinking water is provided to water inlet tube **70** into inlet **74** and to water supply tube **74.** When a pig desires drinking water, it nudges the nipples **66** or bites the additional nipples **80, 82** causing water to be dispensed for drinking. Any water that is not drank from nipples **66** immediately falls onto horizontal base **56** and remains there, being contained by end plates **72, 74.** The top lip **62** acts to prevent undesirable material from falling into the trough **72,** e.g. any material attached to a supporting wall of a building.

Additionally, as the water supply tube **74** is located adjacent to the top lip **62,** the design is efficient in terms of material used in construction.

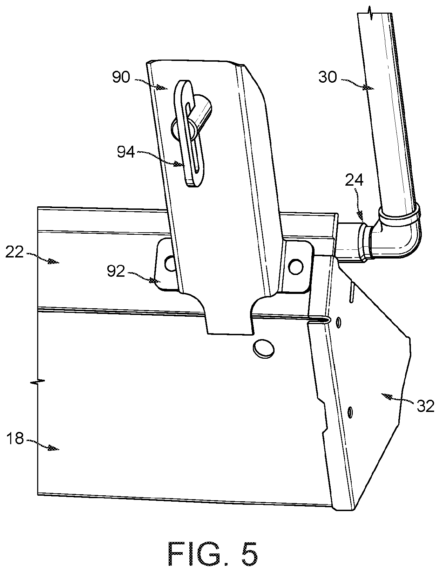

Figure 5 shows a rear perspective view of one side of the apparatus **10** shown in figure 1 which also has a mounting bracket **90** that has an angled base **92** so that it can be bolted to the top lip **22** and part of the rear wall **18** so that it is parallel to the rear wall **18.** The mounting bracket also comprises an antiluce fastener **94.**

In use, the apparatus is mounted on a support bracket (not shown) attached to the wall of a building, that comprises a plurality of horizontal openings, at different heights from the floor of the building. Antiluce fastener **94** is inserted into one such horizontal opening, holding the trough **12** in place on the wall. When it is desired to change the height of the trough from the floor the antiluce fastener **94** is rotated to become horizontal and removed from the support bracket. It can then be placed in a different horizontal opening at the desired height of the trough.

## Claims

1. An apparatus (10, 50) for providing drinking water to pigs, the apparatus comprising:
an elongate trough (12, 52) comprising a base (16, 56), a rear wall (18, 58), a forward lip (20, 60), and a top lip (22, 62) extending forwardly from the rear wall (18, 58);
a horizontal water supply tube (14, 54) having a first end (15, 55) and a second end (17, 57), the first end (15, 55) providing an inlet (24, 74) adapted to receive a supply of drinking water, and a plurality of nipples (26, 66) spaced apart along the length of the water supply tube (14, 54) and protruding therefrom,
the water supply tube (14, 54) being mounted within the trough (12, 52) by being located below and adjacent to the top lip (22, 62); whereby in use drinking water enters the water supply tube (14, 54) and leaves via the plurality of nipples (26, 66) and is catchable by falling onto the base (16, 56) of the elongate trough (12, 52).

2. An apparatus (10, 50) according to claim 1, wherein at least one additional nipple (80, 82) is provided at the first (15, 55) and/or second end (17, 57), wherein the at least one additional nipple (80, 82) extends beyond the trough (12, 52), such that water leaving the at least one additional nipple (80, 82) is not catchable by falling onto the trough (12, 52).

3. An apparatus (10, 50) according to claim 1 or claim 2, wherein the base (16, 56) is horizontal along its length and the rear wall (18, 58) is vertical.

4. An apparatus (10, 50) according to any one of the preceding claims, wherein the trough (12, 52) has a length in the range of from 30 to 300cm.

5. An apparatus (10, 50) according to any one of the preceding claims, which comprises from 3 to 15 nipples (26, 66) evenly spaced along the trough (12, 52).

6. An apparatus (10, 50) according to any one of the preceding claims, wherein the top lip (22, 62) is at an angle to the horizontal, and covers a portion of the base (16, 56), leaving a portion of the base (16, 56) uncovered.

7. An apparatus (10, 50) according to any one of the preceding claims, wherein the trough (12, 52) comprises first (32, 72) and second end plates (34, 74), so that any water falling onto the base (16, 56) is contained within the trough (12, 52).

8. An apparatus (10, 50) according to any one of claims 1 to 6, wherein the base (16, 56) is angled upwards at the two ends of the trough (32, 34, 72, 74), so that any water falling onto the base (16, 56) is contained within the trough (12, 52).

9. An apparatus (10, 50) according to any one of the preceding claims, which comprises a height adjustment means, to permit the trough (12, 52) to be raised and/or lowered.

10. A building suitable for housing pigs comprising at least one apparatus (10, 50) according to any one of the preceding claims.

11. A building according to claim 10, wherein the apparatus (10, 50) is positioned such that the base (16, 56) is from 50 to 200mm from the ground.

## Patentansprüche

1. Vorrichtung (10, 50) zum Bereitstellen von Trinkwasser für Schweine, wobei die Vorrichtung Folgendes umfasst:
einen länglichen Trog (12, 52), der eine Basis (16, 56), eine Rückwand (18, 58), eine vordere Lippe (20, 60) und eine obere Lippe (22, 62) umfasst, die sich von der Rückwand (18, 58) nach vorne erstreckt,
ein horizontales Wasserzufuhrrohr (14, 54) mit einem ersten Ende (15, 55) und einem zweiten Ende (17, 57), wobei das erste Ende (15, 55) einen Einlass (24, 74), der zur Aufnahme einer Trinkwasserzufuhr ausgeführt ist, und einer Vielzahl von Tränkenippeln (26, 66), die entlang der Länge des Wasserzufuhrrohrs (14, 54) beabstandet sind und davon vorstehen,
wobei das Wasserzufuhrrohr (14, 54) in dem Trog (12, 52) montiert ist, indem es unter der oberen Lippe (22, 62) und dieser benachbart angeordnet ist, wobei Trinkwasser im Gebrauch in das Wasserzufuhrrohr (14, 54) eintritt und über die Vielzahl von Tränknippeln (26, 66) austritt und auffangbar ist, indem es auf die Basis (16, 56) des länglichen Trogs (12, 52) fällt.

2. Vorrichtung (10, 50) nach Anspruch 1, wobei mindestens ein zusätzlicher Tränknippel (80, 82) an dem ersten (15, 55) und/oder zweiten Ende (17, 57) vorgesehen ist, wobei sich der mindestens eine zusätzliche Tränknippel (80, 82) über den Trog (12, 52) hinaus erstreckt, so dass Wasser, das den mindestens einen zusätzlichen Tränknippel (80, 82) verlässt, nicht durch Fallen auf den Trog (12, 52) auffangbar ist.

3. Vorrichtung (10, 50) nach Anspruch 1 oder Anspruch 2, wobei die Basis (16, 56) entlang ihrer Länge horizontal ist und die Rückwand (18, 58) vertikal ist.

4. Vorrichtung (10, 50) nach einem der vorhergehenden Ansprüche, wobei der Trog (12, 52) eine Länge im Bereich von 30 bis 300 cm hat.

5. Vorrichtung (10, 50) nach einem der vorhergehenden Ansprüche, die 3 bis 15 Tränknippel (26, 66) umfasst, die gleichmäßig entlang des Trogs (12, 52) beabstandet sind.

6. Vorrichtung (10, 50) nach einem der vorhergehenden Ansprüche, wobei die obere Lippe (22, 62) in einem Winkel zur Horizontalen steht und einen Abschnitt der Basis (16, 56) abdeckt, wobei ein Abschnitt der Basis (16, 56) unabgedeckt bleibt.

7. Vorrichtung (10, 50) nach einem der vorhergehenden Ansprüche, wobei der Trog (12, 52) eine erste (32, 72) und eine zweite Endplatte (34, 74) umfasst, so dass jegliches auf die Basis (16, 56) fallende Wasser in dem Trog (12, 52) gehalten wird.

8. Vorrichtung (10, 50) nach einem der Ansprüche 1 bis 6, wobei die Basis (16, 56) an den zwei Enden (32, 34, 72, 74) des Trogs nach oben abgewinkelt ist, so dass jegliches auf die Basis (16, 56) fallende Wasser in dem Trog (12, 52) gehalten wird.

9. Vorrichtung (10, 50) nach einem der vorhergehenden Ansprüche, die ein Höhenverstellmittel umfasst, damit der Trog (12, 52) angehoben und/oder abgesenkt werden kann.

10. Gebäude, das zum Unterbringen von Schweinen geeignet ist, umfassend mindestens eine Vorrichtung (10, 50) nach einem der vorhergehenden Ansprüche.

11. Gebäude nach Anspruch 10, wobei die Vorrichtung (10, 50) so positioniert ist, dass die Basis (16, 56) 50 bis 200 mm vom Boden entfernt ist.

## Revendications

1. Appareil (10, 50) pour fournir de l'eau potable à des porcs, l'appareil comprenant :
une auge allongée (12, 52) comprenant une base (16, 56), une paroi arrière (18, 58), une lèvre avant (20, 60), et une lèvre supérieure (22, 62) s'étendant vers l'avant à partir de la paroi arrière (18, 58) ;
un tube d'alimentation en eau horizontal (14, 54) comportant une première extrémité (15, 55) et une seconde extrémité (17, 57), la première extrémité (15, 55) fournissant une entrée (24, 74) conçue pour recevoir une alimentation en eau potable, et une pluralité de tétines (26, 66) espacées sur la longueur du tube d'alimentation en eau (14, 54) et faisant saillie à partir de celui-ci, le tube d'alimentation en eau (14, 54) étant monté à l'intérieur de l'auge (12, 52) en étant situé au-dessous et à côté de la lèvre supérieure (22, 62) ; ainsi, lors de l'utilisation, l'eau potable pénètre dans le tube d'alimentation en eau (14, 54) et en sort par la pluralité de tétines (26, 66) et peut être attrapée en tombant sur la base (16, 56) de l'auge allongée (12, 52).

2. Appareil (10, 50) selon la revendication 1, au moins une tétine supplémentaire (80, 82) étant située au niveau de la première (15, 55) et/ou de la seconde extrémité (17, 57), l'au moins une tétine supplémentaire (80, 82) s'étendant au-delà de l'auge (12, 52), de sorte que l'eau quittant l'au moins une tétine supplémentaire (80, 82) ne puisse pas être attrapée en tombant sur l'auge (12, 52).

3. Appareil (10, 50) selon la revendication 1 ou la revendication 2, la base (16, 56) étant horizontale sur toute sa longueur et la paroi arrière (18, 58) étant verticale.

4. Appareil (10, 50) selon l'une quelconque des revendications précédentes, l'auge (12, 52) ayant une longueur dans la plage comprise entre 30 et 300 cm.

5. Appareil (10, 50) selon l'une quelconque des revendications précédentes, qui comprend de 3 à 15 tétines (26, 66) régulièrement espacées le long de l'auge (12, 52).

6. Appareil (10, 50) selon l'une quelconque des revendications précédentes, la lèvre supérieure (22, 62) formant un angle avec l'horizontale et recouvrant une partie de la base (16, 56), laissant une partie de la base (16, 56) à découvert.

7. Appareil (10, 50) selon l'une quelconque des revendications précédentes, l'auge (12, 52) comprenant des première (32, 72) et seconde plaques d'extrémité (34, 74), de sorte que l'eau tombant sur la base (16, 56) soit contenue dans l'auge (12, 52).

8. Appareil (10, 50) selon l'une quelconque des revendications 1 à 6, la base (16, 56) étant inclinée vers le haut au niveau des deux extrémités de l'auge (32, 34, 72, 74), de sorte que l'eau tombant sur la base (16, 56) soit contenue dans l'auge (12, 52).

9. Appareil (10, 50) selon l'une quelconque des revendications précédentes, qui comprend un moyen de réglage de hauteur pour permettre à l'auge (12, 52) d'être élevée et/ou abaissée.

10. Bâtiment approprié pour héberger des porcs comprenant au moins un appareil (10, 50) selon l'une quelconque des revendications précédentes.

11. Bâtiment selon la revendication 10, l'appareil (10, 50) étant positionné de sorte que la base (16, 56) se trouve entre 50 et 200 mm du sol.
